# EUROPEAN PATENT SPECIFICATION

(11) **EP 2 772 473 B1**
(45) Date of publication and mention of the grant of the patent: **02.01.2019**
(21) Application number: 12844084.9
(22) Date of filing: 24.10.2012
(51) Int. Cl.: C04B 35/50, C04B 35/00, C04B 35/46, H01B 1/08, H01M 8/02, H01M 8/12

(54) **CERAMIC SINTERED COMPACT, HIGH-TEMPERATURE MEMBER, AND ELECTROCHEMICAL ELEMENT**
KERAMIKSINTERPRESSLING, HOCHTEMPERATURELEMENT UND ELEKTROCHEMISCHES ELEMENT
COMPRIMÉ FRITTÉ CÉRAMIQUE, ÉLÉMENT À HAUTE TEMPÉRATURE ET ÉLÉMENT ÉLECTROCHIMIQUE

(30) Priority: 24.10.2011 JP 2011232993
(43) Date of publication of application: 03.09.2014
(73) Proprietor: Kyocera Corporation, Kyoto-shi, Kyoto 612-8501 (JP)
(72) Inventor: FUJIMOTO,Tetsuro, Kyoto-shi Kyoto 612-8501 (JP); HARA,Akihiro, Kyoto-shi Kyoto 612-8501 (JP); MINAMIUE,Hidehiro, Kyoto-shi Kyoto 612-8501 (JP)
(74) Representative: Viering, Jentschura & Partner mbB Patent- und Rechtsanwälte
(86) International application number: PCT/JP2012/077525
(87) International publication number: WO 2013/062023

(56) References cited:
- EP-A1- 1 992 599
- JP-A- H10 125 340
- JP-A- 2001 322 871
- US-A- 5 508 242
- CHENG BO ET AL: "Effects of grain modification on the dielectric properties of A0.03Ti0.10Ni0.87O (A:K+,Mg2+,Y3+) ceramics", APPLIED PHYSICS LETTERS, AMERICAN INSTITUTE OF PHYSICS, US, vol. 92, no. 14, 8 April 2008 (2008-04-08) , pages 142903-142903, XP012106384, ISSN: 0003-6951, DOI: 10.1063/1.2900966
- MANTZOURIS X ET AL: "Mixed conducting oxides Y x Zr1-x-y Ti y O2-x/2 (YZT) and corresponding Ni/YZT cermets as anode materials in an SOFC", JOURNAL OF MATERIALS SCIENCE, KLUWER ACADEMIC PUBLISHERS, BO, vol. 42, no. 24, 25 September 2007 (2007-09-25), pages 10152-10159, XP019553016, ISSN: 1573-4803, DOI: 10.1007/S10853-007-2099-3
- LIU Y ET AL: "The pyrochlore to 'defect fluorite' transition in the Y2(ZryTi1-y)2O7 system and its underlying crystal chemistry", JOURNAL OF SOLID STATE CHEMISTRY, ORLANDO, FL, US, vol. 177, no. 12, 1 December 2004 (2004-12-01), pages 4404-4412, XP004682748, ISSN: 0022-4596, DOI: 10.1016/J.JSSC.2004.09.014
- C ET AL: "PROCEEDINGS OF THE IV INTERNATIONAL CONFERENCE/HIGH TEMPERATURE CAPILLARITY Interfacial properties and structure stability of Ni/Y 2 O 3 -ZrO 2 -TiO 2 cermet anodes for solid oxide fuel cells", , 1 January 2005 (2005-01-01), XP55176911, Retrieved from the Internet: URL:http://rd.springer.com/content/pdf/10. 1007/s10853-005-1977-9.pdf [retrieved on 2015-03-16]
- MANTZOURIS X ET AL: "Physical characterization of Y2O3-CeO2-TiO2 (YCT) mixed oxides and Ni/YCT cermets as anodes in solid oxide fuel cells", JOURNAL OF MATERIALS SCIENCE, KLUWER ACADEMIC PUBLISHERS, BO, vol. 43, no. 22, 30 October 2008 (2008-10-30), pages 7057-7065, XP019644433, ISSN: 1573-4803, DOI: 10.1007/S10853-008-3063-6
- L.F. HE: 'Mechanical properties of Y2Ti2O' SCRIPTA MATERIALIA vol. 64, no. 6, March 2011, pages 548 - 551, XP027590523
- T. V. BARINOVA: 'Mineral-like ceramics for immobilization of nuclear wastes by forced SHS compaction' INTERNATIONAL JOURNAL OF SELF- PROPAGATING HIGH-TEMPERATURE SYNTHESIS vol. 20, no. 2, June 2011, pages 67 - 71, XP019921105

## Description

### Technical Field

The present invention relates to a ceramic sintered body, a high-temperature-use member, and an electrochemical device.

### Background Art

Recently, research and development on electrochemical devices such as fuel battery cells and oxygen sensor devices has been actively conducted. For example, since a solid-oxide fuel battery cell realizes high power-generation efficiency due to its high operating temperature, there have been great expectations for use of a solid-oxide fuel battery cell as a cell used for a third-generation power-generating system.

A known solid-oxide fuel battery cell of the related art includes a pair of flat surfaces that are parallel to each other, fuel gas passages formed inside the solid-oxide fuel battery cell, through which fuel gas flows, and an electrically conductive, porous supporting substrate containing Ni. A fuel electrode layer, a solid-electrolyte layer, and an oxygen electrode layer are sequentially stacked on or above one principal surface of the porous supporting substrate. An interconnector layer is stacked on the other principal surface.

The known electrically conductive, porous supporting substrate of the related art is composed of an iron-group metal and/or an oxide of an iron-group metal; and a rare-earth oxide containing at least one element selected from the group consisting of Y, Lu, Yb, Tm, Er, Ho, Dy, Gd, Sm, and Pr in order to, for example, set the thermal expansion coefficient of the porous supporting substrate to be equal to the thermal expansion coefficient of the solid-electrolyte layer composed of zirconia. It is described that the content of the rare-earth oxide in the supporting substrate is 35% to 65% by volume (e.g., see PTL 1).

A solid-oxide fuel battery cell including a fuel electrode layer containing nickel particles and/or nickel oxide particles, zirconia particles in which a rare-earth element is dissolved, and particles containing the Ti element, in which the particles containing the Ti element are present at least at the grain boundaries of the particles contained in the fuel electrode layer, is also known (e.g., see PTL 2).

### Citation List

### Patent Literature

PTL 1: Japanese Unexamined Patent Application Publication No. 2004-146334
PTL 2: Japanese Unexamined Patent Application Publication No. 2008-098156

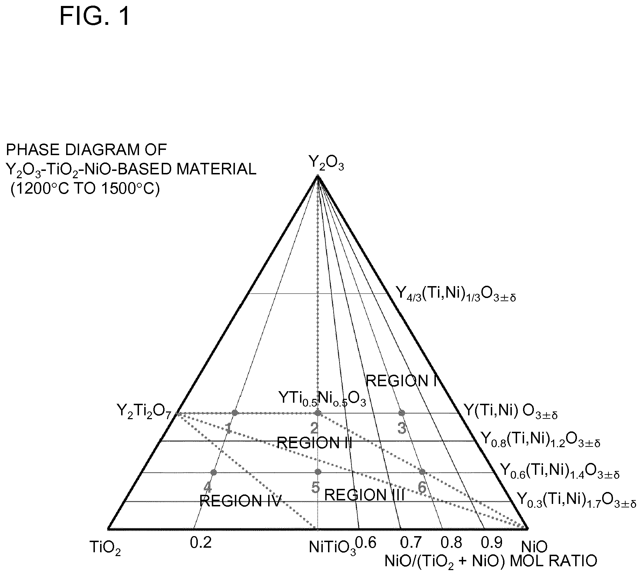

"Effects of grain modification on the dielectric properties of A_{0.03}Ti_{0.01}Ni_{0.87}O (A: K⁺, Mg²⁺, Y³⁺) ceramics" (CHENG BO ET AL., APPLIED PHYSICS LETTERS, AMERICAN INSTITUTE OF PHYSICS, US, vol. 92, no. 14, 8 April 2008 (2008-04-08), pages 142903-142903, XP012106384, ISSN: 0003-6951, DOI: 10.1063/1.2900966) discloses Y_{0.03}Ti_{0.10}Ni_{0.87}O (YTNO) ceramics and Y₂Ti₂O₇ phase (cf. first page and Fig. 1).

"Mixed conducting oxides YₓZr_{1-x-y}Ti_{y}O_{2-x/2} (YZT) and corresponding Ni/YZT cermets as anode materials in an SOFC" (MANTZOURIS X ET AL, JOURNAL OF MATERIAL SCIENCE, KLUWER ACADEMIC PUBLISHERS, BO, vol. 42, no. 24, 25 September 2007 (2007-09-25), pages 10152-10159, XP019553016, ISSN: 1573-4803, DOI: 10.1007/S10853-007-2099-3) discloses using Ni/YₓZr_{1-x-y}Ti_{y}O_{2-x/2} cermets with 30, 40 and 45 vol% Ni as anode materials in an SOFC.

### Summary of Invention

### Technical Problem

The supporting substrate material of PTL 1 described above includes a large amount of rare-earth element. However, recently, it has been difficult to obtain the raw materials of rare-earth elements and rare-earth elements have, as a result, been becoming more expensive. Therefore, there has been a demand for a supporting substrate material containing a small amount of rare-earth element.

An object of the present invention is to provide a ceramic sintered body, a high-temperature-use member, and an electrochemical device that contain a small amount of rare-earth element.

### Solution to Problem

The present invention provides a ceramic sintered body including 95% by mass or more of a component having a composition represented by YₓTi_{y}Ni_{z}O_{3±δ} using molar ratios, in which 0 < x, 0 < y, 0 ≤ z, x + y + z = 2, and δ ≤ 1 are satisfied, as defined in claim 1.

The present invention provides a high-temperature-use member including the above-described ceramic sintered body.

The present invention provides an electrochemical device including the above-described high-temperature-use member and a device on the high-temperature-use member. The device includes a first electrode layer, a solid-electrolyte layer composed of a ceramic, and a second electrode layer. Advantageous Effects of Invention

In the ceramic sintered body according to the present invention, part of Y can be replaced by Ti, which reduces the content of Y, which is a rare-earth element. By using the above-described ceramic sintered body as a high-temperature-use member and an electrochemical device, an inexpensive high-temperature-use member and an inexpensive electrochemical device may be provided.

### Brief Description of Drawings

Fig. 1 is a phase diagram based on Y₂O₃-TiO₂-NiO molar fractions determined from the results of a quantitative analysis of a ceramic sintered body carried out using a Rietveld analysis.
Fig. 2 is a phase diagram based on Y₂O₃-TiO₂-NiO molar fractions, showing the sample Nos. of compositions whose physical properties were examined.
Fig. 3 is a phase diagram based on Y₂O₃-TiO₂-NiO molar fractions, illustrating contour lines of average linear thermal expansion coefficient on the basis of the samples whose average linear thermal expansion coefficients were examined.
Fig. 4 is a phase diagram based on Y₂O₃-TiO₂-NiO molar fractions, illustrating contour lines of electric conductivity on the basis of the samples whose electric conductivities were examined.
Fig. 5 is a phase diagram based on Y₂O₃-TiO₂-NiO molar fractions, illustrating the region in which a good electric conductivity and a good average linear thermal expansion coefficient are realized.
Fig. 6 includes graphs each showing the results of an X-ray diffractometry using Cu-Kα1 radiation and the results of a Rietveld analysis, in which (a) shows the results of Sample No. 1 and (b) shows the results of Sample No. 2.
Fig. 7 includes graphs each showing the results of an X-ray diffractometry using Cu-Kα1 radiation and the results of a Rietveld analysis, in which (a) shows the results of Sample No. 5 and (b) shows the results of Sample No. 6.
Fig. 8 includes cross-sectional scanning electron microscope (SEM) images, in which (a) is the SEM image of Sample No. 5 and (b) is the SEM image of Sample No. 6.
Fig. 9 is a transverse cross-sectional view of a flat-plate-like solid-oxide fuel battery cell.
Fig. 10 includes diagrams illustrating a hollow, flat-plate-like solid-oxide fuel battery cell, in which (a) is a transverse cross-sectional view and (b) is a side view from the interconnector-layer-side in which illustration of an interconnector layer is omitted.
Fig. 11 is a transverse cross-sectional view of an oxygen sensor.

### Description of Embodiments

The ceramic sintered body according to the present invention includes 95% by mass or more of a component having a composition represented by YₓTi_{y}Ni_{z}O_{3±δ} using molar ratios, in which 0 < x, 0 < y, 0 ≤ z, x + y + z = 2, and δ ≤ 1 are satisfied, as defined in claim 1. The balance is 5% by mass or less of metal elements other than Y, Ti, and Ni. The content of the above-described component in the ceramic sintered body may be 97% by mass or more or 99% by mass or more. The ceramic sintered body may be composed of the above-described component and inevitable impurities (0.1% by mass or less). Examples of the inevitable impurities include rare-earth elements other than Y, Cu, Co, Fe, Al, Si, and S.

The balance other than the above-described component may include metal elements other than Y, Ti, and Ni. For example, the ceramic sintered body may include 5% by mass or less of Al₂O₃, Nb₂O₅, or the like relative to the total mass of the ceramic sintered body. The content of the balance can be measured using an ICP emission spectral analysis system.

An explanation is given below with reference to Fig. 1, which is a phase diagram based on Y₂O₃-TiO₂-NiO molar fractions determined from the results of a quantitative analysis of a ceramic sintered body carried out using a Rietveld analysis. In this phase diagram, points on the line segment connecting the vertex representing Y₂O₃ and the vertex representing NiO and points on the line segment connecting the vertex representing TiO₂ and the vertex representing NiO are excluded. In particular, desirably, a composition in the vicinity of the line segment connecting the vertex representing Y₂O₃ and the vertex representing NiO, that is, the region in which the total amount of Y₂O₃ and NiO is 98% by mole of the total moles, is excluded. In addition, a composition in the vicinity of the line segment connecting the vertex representing TiO₂ and the vertex representing NiO, that is, the region in which the total amount of TiO₂ and NiO is 98% by mole of the total moles, is also excluded.

In the above-described ceramic sintered body, part of Y can be replaced by Ti, which reduces the content of Y, which is a rare-earth element, compared with a known ceramic sintered body of the related art containing Y and Ni. Therefore, an inexpensive ceramic sintered body can be produced.

In particular, the ceramic sintered body includes at least any one of Y₂Ti₂O₇ and a complex-oxide phase including Y, Ti, and Ni as a crystal phase.

The average linear thermal expansion coefficients of Y₂Ti₂O₇ and the complex-oxide phase including Y, Ti, and Ni in the range of room temperature to 1000°C are about 10 × 10⁻⁶/°C. Thus, when the ceramic sintered body includes at least any one of Y₂Ti₂O₇ and the complex-oxide phase including Y, Ti, and Ni as a crystal phase, the average linear thermal expansion coefficient of the ceramic sintered body in the range of room temperature to 1000°C can be set to about 10 × 10⁻⁶/°C to about 13 × 10⁻⁶/°C, which is close to, for example, the average linear thermal expansion coefficient (10.8 × 10⁻⁶/°C) of a solid-electrolyte layer of a zirconia-based electrochemical device in the range of room temperature to 1000°C. Thus, such a ceramic sintered body can be suitably used as a high-temperature-use member. In other words, the separation between a high-temperature-use member and a solid-electrolyte layer caused due to the difference in the average linear thermal expansion coefficients therebetween can be suppressed.

In order to control the average linear thermal expansion coefficient, in the phase diagram based on Y₂O₃-TiO₂-NiO molar fractions, the region represented by the range surrounded by the vertex representing Y₂O₃, the vertex representing NiO, the vertex representing TiO₂, the point representing Y₂Ti₂O₇, and the point representing YTi_{0.5}Ni_{0.5}O₃ (regions I to IV in Fig. 1) is desirable. While ceramic sintered bodies having the compositions of region I in Fig. 1 fall within the scope of the present invention, ceramic sintered bodies having the compositions of the other regions in Fig. 1 fall outside the scope of the present invention.

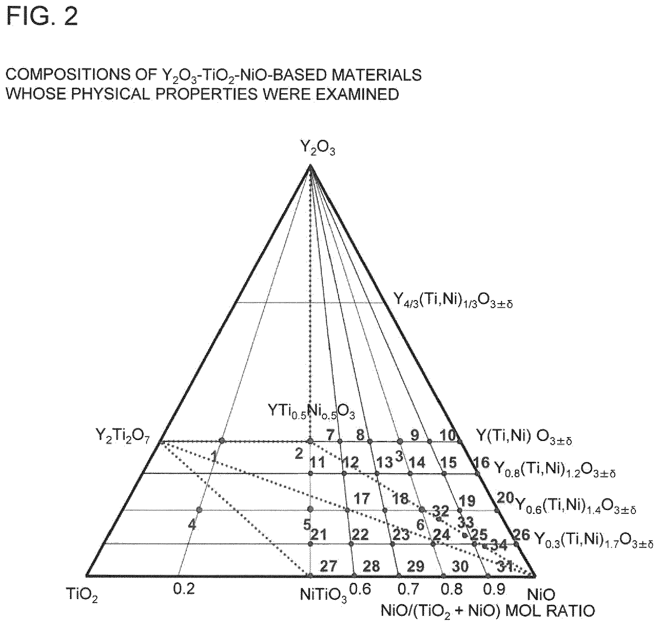

Furthermore, in order to control the average linear thermal expansion coefficient, when the composition of the ceramic sintered body is represented by Yₓ(Ti_{y}Ni_{1-y})₂₋ₓO_{3±δ} using molar ratios, 0 < x ≤ 1 and 0 < y < 1 are desirably satisfied. Specifically, this is the region, in the phase diagram shown in Fig. 2, surrounded by the vertex representing TiO₂, the vertex representing NiO, the point representing Y₂Ti₂O₇, and the point representing Sample No. 10 (the point representing YNiO_{2.5}).

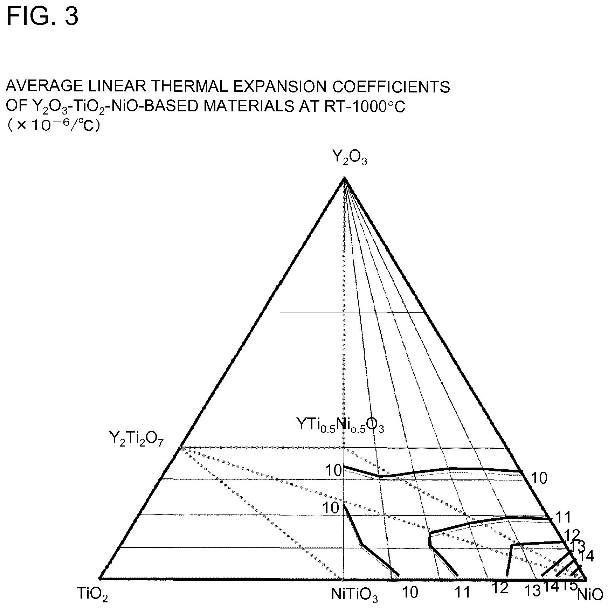

When the solid-electrolyte layer is composed of a ceramic such as YSZ or lanthanum gallate, the average linear thermal expansion coefficient of the solid-electrolyte layer in the range of room temperature to 1000°C is 10.8 × 10⁻⁶/°C to 14 × 10⁻⁶/°C. Thus, the average linear thermal expansion coefficient of the ceramic sintered body in the range of room temperature to 1000°C is preferably 10 × 10⁻⁶/°C to 13 × 10⁻⁶/°C in order to ensure that the ceramic sintered body is joined to the solid-electrolyte layer without cracking or separation. The average linear thermal expansion coefficients (× 10⁻⁶/°C) of ceramic sintered bodies were determined by experiment using the samples shown in Fig. 2. Fig. 3 shows contour lines of average linear thermal expansion coefficient. According to Fig. 3, in order to realize a high average linear thermal expansion coefficient, the composition of the ceramic sintered body represented by Yₓ(Ti_{y}Ni_{1-y})₂₋ₓO_{3±δ} desirably falls within the range in which 0 < x ≤ 1 and 0 < y ≤ 0.5 are satisfied. In particular, in order to realize a high average linear thermal expansion coefficient, the composition of the ceramic sintered body desirably falls within, in the phase diagram, the range surrounded by the following points represented by (Y₂O₃, TiO₂, NiO): (0.25, 0, 0.75), (0.25, 0.375, 0.375), (0.176, 0.0.412, 0.412), (0, 0.4, 0.6), (0, 0.1, 0.9), and (0.053, 0, 0.947) (except for compositions on the line segment connecting the vertex representing Y₂O₃ and the vertex representing NiO and the line segment connecting the vertex representing TiO₂ and the vertex representing NiO).

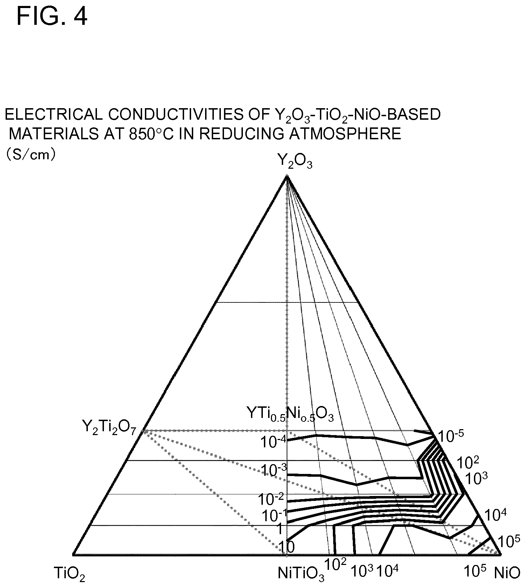

When the high-temperature member has electrical conductivity, in particular, conduction by a Ni path is necessary. Considering this to be a percolation model, 30% by volume or more of metallic Ni is considered to be needed. In other words, the high-temperature member has electrical conductivity when the ceramic sintered body includes 30% by volume or more of metallic Ni as a crystal phase. The electrical conductivities of the samples shown in Fig. 2 were determined by experiment and shown in Fig. 4 as contour lines of electric conductivity. According to Fig. 4, in order to realize a high electrical conductivity, the composition of the ceramic sintered body represented by Yₓ(Ti_{y}Ni_{1-y})₂₋ₓO_{3±δ} desirably falls within the range in which 0 < x ≤ 1 and 0 < y ≤ 0.5 are satisfied. In particular, the composition of the ceramic sintered body represented by Yₓ(Ti_{y}Ni_{1-y})₂₋ₓO_{3±δ} desirably falls within the range in which 0 < x ≤ 1 and 0 < y ≤ 0.5 are satisfied, at least one substance selected from Ni, NiO, and NiTiO₃ is preferably present in the ceramic sintered body as a crystal phase, and the ceramic sintered body preferably contains 30% by volume or more of Ni in terms of metallic Ni. Note that, NiO and NiTiO₃ contained in the high-temperature member are changed into metallic Ni after a reduction treatment.

The volume fraction of metallic Ni can be determined as a fraction of metallic Ni relative to the total volume by analyzing SEM images of cross sections of the ceramic sintered body using an image analysis apparatus. In this case, pore portions in the cross sections are not included in the total volume.

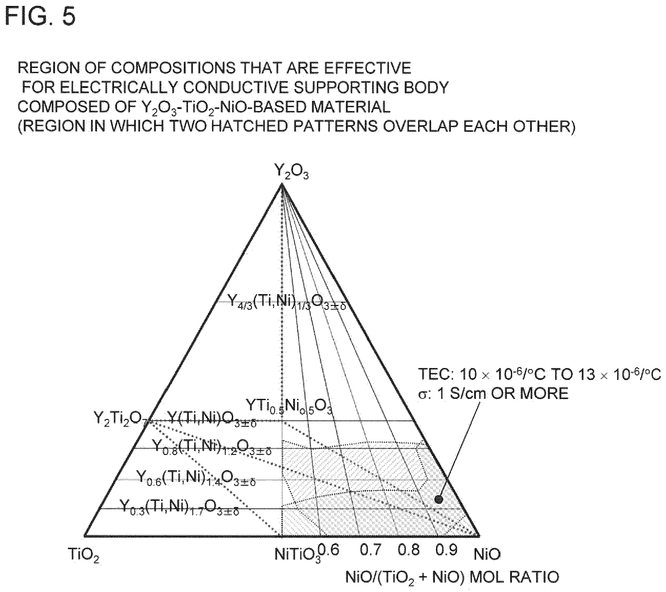

Thus, in order to realize a good electrical conductivity and a good average linear thermal expansion coefficient, the composition of the ceramic sintered body represented by Yₓ(Ti_{y}Ni_{1-y})₂₋ₓO_{3±δ} falls within the region in which 0 < x ≤ 1 and 0 < y ≤ 0.5 are satisfied. In particular, the composition of the ceramic sintered body desirably falls within the region in which two hatched patterns overlap each other in Fig. 5. Specifically, at least one substance selected from Ni, NiO, and NiTiO₃ is preferably present in the ceramic sintered body as a crystal phase, the Ni content is desirably 30% by volume or more in terms of metallic Ni, and, in the phase diagram, the composition of the ceramic sintered body desirably falls within the range surrounded by the following points represented by (Y₂O₃, TiO₂, NiO): (0.25, 0, 0.75), (0.25, 0.375, 0.375), (0.176, 0.0.412, 0.412), (0, 0.4, 0.6), (0, 0.1, 0.9), and (0.053, 0, 0.947).

The term "high-temperature-use member" herein refers to a member to be exposed to a high temperature of 200°C or more, and examples thereof include members used for a fuel cell or an oxygen sensor.

The complex-oxide phase including Y, Ti, and Ni is identified as YTiO₃ (ICDD No. 70-2297) and Y(NiO₃) (ICDD No. 70-6592) as a result of identification using an X-ray powder diffraction profile of the sintered body. Thus, the complex-oxide phase including Y, Ti, and Ni is considered to be a crystal having a structure that is closely analogous to YTiO₃ and Y(NiO₃), and the complex-oxide phase is considered to have a composition represented by YTi_{0.5}Ni_{0.5}O₃. Hereinafter, the complex-oxide phase including Y, Ti, and Ni may be referred to as "YTN".

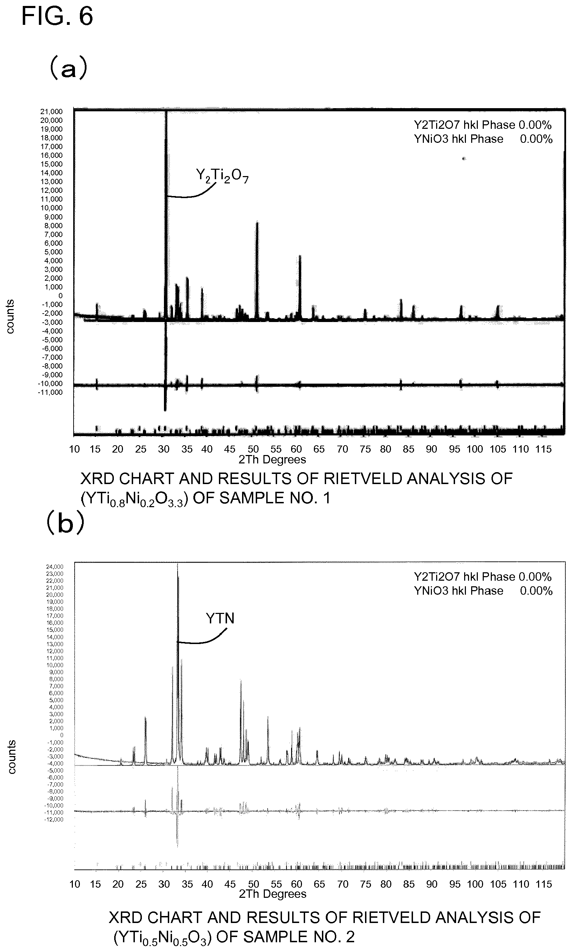

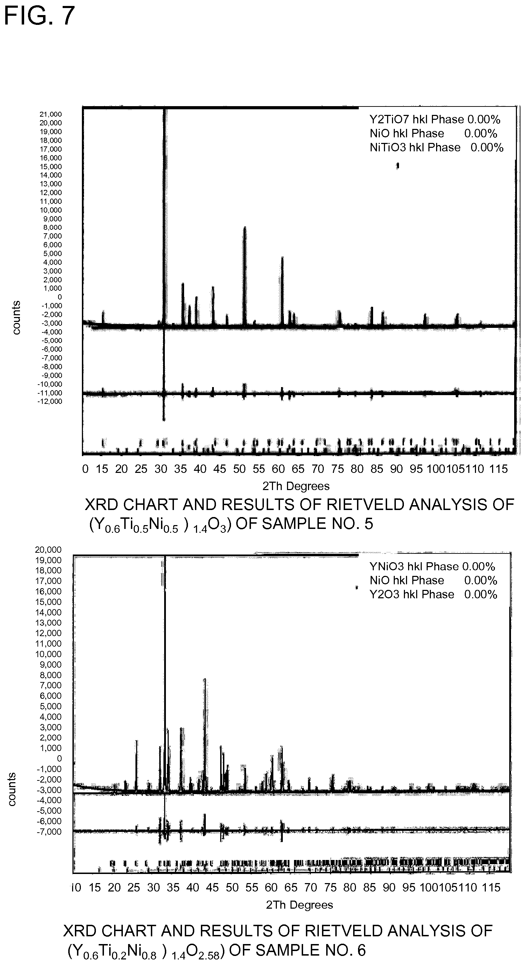

Fig. 6 shows the results of an X-ray diffractometry using Cu-Kα1 radiation and a Rietveld analysis of high-temperature-use members (Sample Nos. 1 and 2). The main peak corresponding to the complex-oxide phase (YTN) including Y, Ti, and Ni appears at 2θ = 33.1°, and the main peak corresponding to Y₂Ti₂O₇ appears at 2θ = 30.7°. The main peak corresponding to NiO appears at 2θ = 43.3°. Fig. 7 shows the results of an X-ray diffractometry using Cu-Kα1 radiation and a Rietveld analysis of high-temperature-use members (Sample Nos. 5 and 6).

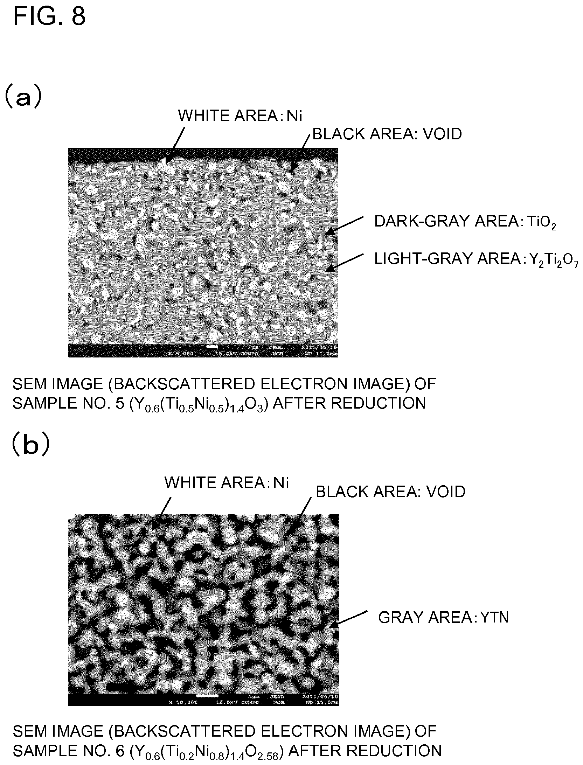

Fig. 8 includes scanning electron microscope (SEM) images of the cross sections of ceramic sintered bodies (Sample Nos. 5 and 6) that are subjected to a reduction treatment after being sintered. In Fig. 8(a), the ceramic sintered body contains a large amount of light gray Y₂Ti₂O₇. In Fig. 8(b), the ceramic sintered body contains a large amount of crystal particles of a gray complex-oxide phase (YTN) including Y, Ti, and Ni.

The high-temperature-use member may include any one of Y₂Ti₂O₇ and the complex-oxide phase (YTN) including Y, Ti, and Ni and may have an insulating property. In other words, this is the case where the metallic Ni content in the high-temperature-use member after a reduction treatment is less than 30% by volume. In order to maintain an insulating property of 10⁴ Ω·cm or more, the metallic Ni content after a reduction treatment is desirably 5% by volume or less. The insulating property of the high-temperature-use member in a reducing atmosphere may be determined by measuring the electric conductivity of the high-temperature-use member by a four-probe method.

The insulating high-temperature-use member may be used as, for example, a supporting body of a "horizontal-strip-type" fuel battery cell. A horizontal-strip-type fuel battery cell includes, for example, a plurality of power-generating device units that each include a fuel electrode layer, a solid-electrolyte layer, and an oxygen electrode layer and that are arranged on a columnar insulating supporting body (porous) in the longitudinal direction of the supporting body with a predetermined spacing therebetween. The plurality of power-generating device units are electrically connected in series. Through-holes penetrate through the supporting body. Hydrogen is supplied through the through-holes, air is supplied from the surface of the oxygen electrode layer, the horizontal-strip-type fuel battery cell is heated to a predetermined temperature, and thereby power is generated (e.g., see Japanese Unexamined Patent Application Publication No. 2010-257744).

The high-temperature-use member may further include, in addition to Y₂Ti₂O₇ and the complex-oxide phase including Y, Ti, and Ni, at least one substance selected from Ni, NiO, and NiTiO₃ as a crystal phase, contain 30% by volume or more of Ni in terms of metallic Ni, and have electrical conductivity after the high-temperature member is subjected to a reduction treatment. In other words, this is the case where the metallic Ni content in the high-temperature-use member after a reduction treatment is 30% by volume or more. In particular, in order to realize a high electrical conductivity of 10 S/cm or more as measured by a four-probe electrical conductivity measurement method, the metallic Ni content after a reduction treatment is desirably 40% by volume or more. The electrical conductivity of the high-temperature-use member is measured in a hydrogen-nitrogen mixed atmosphere (reducing atmosphere) at an oxygen partial pressure of 10⁻²¹ Pa or less.

The larger the content of Ni or NiO in the electrically conductive high-temperature-use member, the higher the average linear thermal expansion coefficient of the high-temperature-use member. However, since the high-temperature-use member includes Y₂Ti₂O₇ and the complex-oxide phase including Y, Ti, and Ni, which have a low average linear thermal expansion coefficient, the average linear thermal expansion coefficient of the high-temperature-use member can be reduced. The above-described electrically conductive high-temperature-use member may be used as a supporting substrate of a "hollow, flat-plate-like" fuel battery cell, a separator of a flat-plate-like fuel battery cell, or the like. The hollow, flat-plate-like fuel battery cell includes, for example, an electrically conductive, porous supporting substrate, which includes a pair of flat surfaces that are parallel to each other and fuel gas passages formed inside the supporting substrate through which fuel gas is passed. The hollow, flat-plate-like fuel battery cell includes a fuel electrode layer, a solid-electrolyte layer, and an oxygen electrode layer, which are sequentially stacked on or above one principal surface of the electrically conductive, porous supporting substrate, and an interconnector layer stacked on the other principal surface. Hydrogen is supplied through the fuel gas passages of the supporting substrate, air is supplied from the surface of the oxygen electrode layer, the hollow, flat-plate-like fuel battery cell is heated to a predetermined temperature, and thereby power is generated (e.g., see PTL 1) .

The larger the Ni content in the high-temperature-use member, the higher the average linear thermal expansion coefficient thereof. However, since the metallic Ni content after a reduction treatment is 65% by volume or less, the average linear thermal expansion coefficient of the high-temperature-use member can be set close to that of the solid-electrolyte layer.

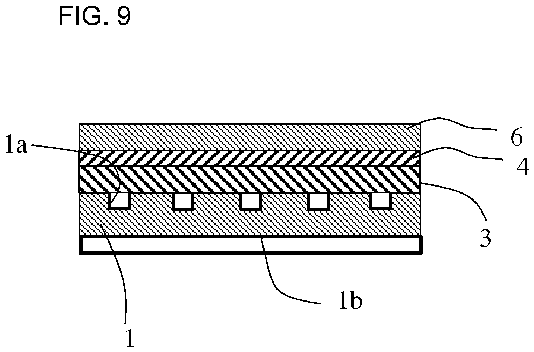

Fig. 9 is a transverse cross-sectional view illustrating a structure in which the high-temperature-use member is used as a separator of a flat-plate-like solid-oxide fuel battery cell (hereinafter, may be abbreviated as "fuel battery cell".

The fuel battery cell shown in Fig. 9 includes a substrate-like separator (high-temperature-use member) 1. A power-generating device including a fuel electrode layer 3 serving as the first electrode layer, a solid-electrolyte layer 4 composed of a ceramic, and an oxygen electrode layer 6 serving as the second electrode layer is formed on the upper surface of the separator 1. The fuel electrode layer 3 and the oxygen electrode layer 6 have a porous structure so as to allow gas to flow therethrough. The solid-electrolyte layer 4 and the separator 1 have a dense structure so as to inhibit supply of gases to the fuel electrode layer 3 and the oxygen electrode layer 6.

The fuel electrode layer 3 causes an electrode reaction to occur and is desirably composed of a publicly known electrically conductive, porous ceramic. The fuel electrode layer 3 may be composed of, for example, ZrO₂ including a rare-earth element dissolved therein or CeO₂ including a rare-earth element dissolved therein; and Ni and/or NiO. Examples of the rare-earth element include Sc, Y, La, Ce, Pr, Nd, Pm, Sm, Eu, Gd, Tb, Dy, Ho, Er, Tm, Yb, and Lu. Y and Yb are desirable because of their low prices. The fuel electrode layer 3 may be composed of, for example, ZrO₂ including Y dissolved therein (YSZ) and Ni and/or NiO.

The content of ZrO₂ including a rare-earth element dissolved therein or CeO₂ including a rare-earth element dissolved therein in the fuel electrode layer 3 is preferably 35% to 65% by volume. The content of Ni or NiO is preferably 65% to 35% by volume. The proportion of open pores in the fuel electrode layer 3 is preferably 15% or more and particularly preferably 20% to 40%. The thickness of the fuel electrode layer 3 is preferably 1 to 30 µm.

The solid-electrolyte layer 4 is preferably composed of a dense ceramic including partially stabilized or stabilized ZrO₂ containing 3% to 15% by mole of a rare-earth element such as Y, Sc, or Yb. The rare-earth element is preferably Y because of its low price. In order to prevent gas permeation, the solid-electrolyte layer 4 desirably has a dense structure having a relative density (as measured by an Archimedes method) of 93% or more. In particular, a relative density of 95% or more is desirable. The thickness of the solid-electrolyte layer 4 is preferably 5 to 50 µm. The solid-electrolyte layer 4 may be a solid-electrolyte layer composed of a material other than ZrO₂, such as a lanthanum gallate-based solid-electrolyte layer or a ceria-based solid-electrolyte layer.

Optionally, a reaction prevention layer may be interposed between the solid-electrolyte layer 4 and the oxygen electrode layer 6 described below in order to strengthen the joint between the solid-electrolyte layer 4 and the oxygen electrode layer 6 and in order to prevent the constituent of the solid-electrolyte layer 4 and the constituent of the oxygen electrode layer 6 from reacting with each other and thereby forming a reaction layer having high electric resistance.

The oxygen electrode layer 6 is preferably composed of an electrically conductive ceramic including an "ABO₃-type" perovskite-type oxide. Such a perovskite-type oxide is preferably a perovskite-type transition metal oxide. In particular, at least one perovskite-type oxide selected from a LaMnO₃-based oxide, a LaFeO₃-based oxide, and a LaCoO₃-based oxide, in which Sr and La are present together at the A-site of the perovskite-type oxide is preferable. A LaCoO₃-based oxide is particularly preferable because of its high electrical conductivity at an operating temperature of about 600°C to about 1000°C. In the above-described perovskite-type oxide, Fe or Mn may be present together with Co at the B-site of the perovskite-type oxide.

It is necessary for the oxygen electrode layer 6 to have gas permeability. Thus, the proportion of open pores in the electrically conductive ceramic (perovskite-type oxide) constituting the oxygen electrode layer 6 is preferably 20% or more and particularly preferably 30% to 50%. The thickness of the oxygen electrode layer 6 is preferably 30 to 100 µm from the viewpoint of current-collection capability.

The separator 1 is composed of the above-described high-temperature-use member. The separator 1 contains metallic Ni as a crystal phase and has electrical conductivity. The electrical conductivity of the separator 1 is 1 S/cm or more as measured by, as described above, a four-probe electrical conductivity measurement method.

The metallic Ni content in the separator 1 after a reduction treatment is set to 30% by volume or more. In particular, in order to realize a high electrical conductivity of 10 S/cm or more, the metallic Ni content in the separator 1 after a reduction treatment is desirably 40% by volume or more. When the metallic Ni content in the separator 1 after a reduction treatment is 5% by volume or more, the separator 1 has a reformation function. Thus, the separator 1 has a function of reforming town gas or the like passing therethrough into hydrogen.

In addition, the metallic Ni content in the separator 1 after a reduction treatment is set to 65% by volume or less. In this case, although the larger the metallic Ni content in the separator 1, the higher the average linear thermal expansion coefficient of the separator 1, the average linear thermal expansion coefficient of the separator 1 can be set close to the average linear thermal expansion coefficient of the solid-electrolyte layer 4 since the metallic Ni content in the separator 1 after a reduction treatment is 65% by volume or less.

Recessed grooves 1a through which hydrogen is supplied to the fuel electrode layer 3 are formed in one principal surface of the plate-like separator 1. Recessed grooves 1b through which air is supplied to the oxygen electrode layer 6 are formed in the other principal surface. The recessed grooves 1a and the recessed grooves 1b are formed in the respective principal surfaces of the separator 1 so as to cross each other.

On a fuel battery cell including a separator 1 and a power-generating device that includes a fuel electrode layer 3, a solid-electrolyte layer 4, and an oxygen electrode layer 6 and that is disposed on the separator 1, another fuel battery cell may be stacked. In this manner, a plurality of fuel battery cells may be electrically connected in series.

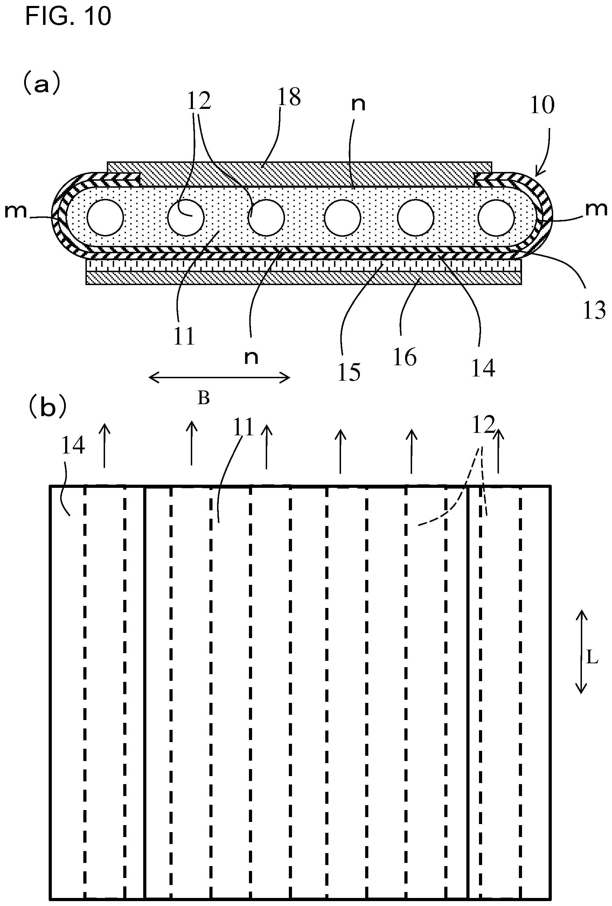

Fig. 10 illustrates a structure in which the high-temperature-use member is used as a supporting substrate of a hollow, flat-plate-like solid-oxide fuel battery cell (hereinafter, may be abbreviated as "fuel battery cell"). Fig. 10(a) is a transverse cross-sectional view of the fuel battery cell and Fig. 10(b) is a side view of the fuel battery cell shown in Fig. 10(a) in which illustration of an interconnector layer is omitted. In Figs. 10(a) and 10(b), a part of the fuel battery cell 10 is shown in an enlarged view. In Fig. 10(b), illustration of the fuel battery cell is scaled down in the length direction thereof; the actual fuel battery cell is long in the vertical direction of Fig. 10 (b) .

The fuel battery cell 10 includes an electrically conductive, porous supporting substrate (a high-temperature-use member, may also be referred to as "electrically conductive supporting body") 11, which has a hollow, flat-plate-like shape, a flat-shaped cross section, and, as a whole, a flat-plate-like columnar appearance. A plurality of fuel gas passages 12 are formed inside the supporting substrate 11 at an appropriate pitch so as to penetrate through the supporting substrate 11 in the length direction L of the supporting substrate 11 (fuel battery cell 10). The fuel battery cell 10 has a structure in which various members are formed on or above the supporting substrate 11.

As is understood from the structure shown in Fig. 10, the supporting substrate 11 is defined by a pair of principal surfaces n facing each other and side surfaces m that are arc-shaped planes formed at the both sides of the supporting substrate 11 in the width direction B of the supporting substrate 11, with which the pair of principal surfaces n are connected to each other. Because it is necessary for the supporting substrate 11 to have fuel gas permeability, the proportion of open pores in the supporting substrate 11 is normally 30% or more and particularly preferably 35% to 50%. The electric conductivity of the supporting substrate 11 is preferably 10 S/cm or more and particularly preferably 100 S/cm or more.

A porous fuel electrode layer 13 is formed so as to cover one principal surface n (lower surface) of the supporting substrate 11 and both of the side surfaces m. A solid-electrolyte layer 14 having a dense structure is stacked so as to cover the fuel electrode layer 13. A porous oxygen electrode layer 16 is stacked above the solid-electrolyte layer 14 with a reaction prevention layer 15 interposed therebetween so as to face the fuel electrode layer 13. The fuel electrode layer 13, the solid-electrolyte layer 14, and the oxygen electrode layer 16 constitute a power-generating device unit, which is disposed on the supporting substrate 11.

An interconnector layer 18 is stacked on the other principal surface n (upper surface) of the supporting substrate 11. Both of the end portions of the solid-electrolyte layer 14 disposed on one principal surface of the supporting substrate 11 are arranged to extend to the other principal surface (upper surface) n of the supporting substrate 11 via the respective side surfaces m. Both of the end portions of the interconnector layer 18 disposed on the other principal surface of the supporting substrate 11 are stacked on and joined to the respective end portions of the solid-electrolyte layer 14. Thus, the supporting substrate 11 is surrounded by the solid-electrolyte layer 14 and the interconnector layer 18 so as to inhibit outward leakage of the fuel gas that flows inside.

In other words, the interconnector layer 18, which has a rectangular shape as viewed in plan view, is arranged to extend from one end of the other principal surface of the supporting substrate 11 to the other end thereof, and the left and right ends of the interconnector layer 18 are stacked on and joined to the respective surfaces of the opened end portions of the solid-electrolyte layer 14.

The portions of the fuel electrode layer 13 and the oxygen electrode layer 16, which face each other with the solid-electrolyte layer 14 interposed therebetween, function as electrodes, and thereby the fuel battery cell 10 generates power. Specifically, oxygen-containing gas such as air is supplied from the outside of the oxygen electrode layer 16, fuel gas (hydrogen-containing gas) is supplied through the fuel gas passages 12 formed inside the supporting substrate 11, the fuel battery cell 10 is heated to a predetermined operating temperature, and thereby power is generated. Current generated due to the power generation is collected via the interconnector layer 18 stacked on the supporting substrate 11.

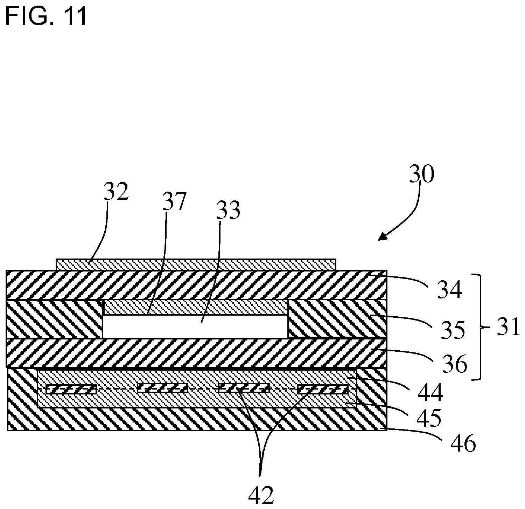

Fig. 11 is a transverse cross-sectional view of a structure in which the high-temperature-use member is used as an electrochemical device, that is, for example, ceramic devices 35 and 36 of an oxygen sensor device. The oxygen sensor 30 includes a ceramic structure 31 inside which an air introduction hole 33 is formed and a heater unit 42 disposed on the lower surface of the ceramic structure 31.

The ceramic structure 31 has a multilayered body including a solid-electrolyte layer (solid electrolyte ceramic) 34 that faces the upper portion of the air introduction hole 33 and ceramic layers 35 and 36, which are stacked on top of one another. A measurement electrode 32 is formed on the upper surface of the solid-electrolyte layer 34, and a reference electrode 37 is formed on the lower surface of the solid-electrolyte layer 34.

The measurement electrode 32 and the reference electrode 37 are each connected to an electrode lead (not shown in the figure). The electrode leads are connected to an extraction electrode (not shown in the figure) formed on the upper surface of the solid-electrolyte layer 34 through the respective through-holes (not shown in the figure) formed in the solid-electrolyte layer 34 in the thickness direction of the solid-electrolyte layer 34.

The measurement electrode 32, the reference electrode 37, the electrode leads, and the extraction electrode can be formed by printing an electrode material on a ceramic green sheet, which is formed into a solid-electrolyte layer 34 after firing, by screen printing or the like. Examples of the electrode material that can be used include platinum and an alloy of platinum with one element selected from the group consisting of rhodium, palladium, lutetium, and gold.

The heater unit 42 is held together with feeding leads between insulation layers 44 and 45 disposed on the lower surface of the ceramic layer 36 and is disposed in a heater substrate 46. The feeding leads are electrically connected to a feeding pad disposed on the lower surface of the heater substrate 46 through through-holes formed in the insulation layer 45 and the heater substrate 46.

The high-temperature-use member may also be used as the insulation layers 44 and 45 or the heater substrate 46.

The solid-electrolyte layer 34 is composed of a solid-electrolyte material. An example of the solid-electrolyte material that can be used is a ceramic containing zirconia. An oxide of a rare-earth element may be used as a stabilizing agent. Examples of the oxide of a rare-earth element include partially stabilized ZrO₂ or stabilized ZrO₂ containing 3% to 15% by mole of a rare-earth oxide such as Y₂O₃, Yb₂O₃, Sc₂O₃, Sm₂O₃, Nd₂O₃, or Dy₂O₃ in terms of oxide. The insulation layers 34 and 35 provides electrical insulation of the ceramic layer 36 from the heater unit 42 and feeding leads that are disposed in the heater substrate 46.

As described above, an oxygen sensor device 30 includes a solid-electrolyte layer and the measurement electrode 32 and the reference electrode 37 that are disposed on the respective surfaces of the solid-electrolyte layer. The electrochemical characteristics of the oxygen sensor device 30 vary depending on the composition of gas (the concentration of oxygen gas) that is brought into contact with these electrodes. Specifically, a zirconia solid electrolyte is heated to about 400°C to about 1000°C by the heater unit 42, an electromotive force generated between the both ends of the solid electrolyte is measured, and thereby oxygen concentration in exhausted gas is detected.

### Example 1

A Y₂O₃ powder having an average particle diameter of 0.6 µm, a TiO₂ powder having an average particle diameter of 0.4 µm, and a NiO powder having an average particle diameter of 0.6 µm were weighed in order to prepare Sample Nos. 1 to 6 having the compositions shown in Table 1. These powders were mixed for 24 hours by a wet process, subsequently a wax was mixed therein, and the resulting powder mixture was passed through a mesh to perform granulation. The granulated powder was formed into a compact body by uniaxial pressing, and the compact body was fired for 2 hours at 1200°C to 1500°C in the air.

After being fired, the resulting sintered body was analyzed by X-ray fluorescence spectroscopy. The mass proportions of Y₂O₃, TiO₂, and NiO in the sintered body were the same as the proportions of the amounts of powders added. The sintered body was subjected to an ICP emission spectral analysis and it was found that the sintered body contained inevitable impurities other than Y, Ti, and Ni, which were 0.1% by mass or less of rare-earth elements other than Y, Al, Si, and the like relative to the total mass of the sintered body.

Subsequently, the sintered body was pulverized and a Rietveld analysis was conducted using a powder X-ray diffraction profile to quantitatively analyze the generated crystal phase. Table 1 shows the results of the analysis. Fig. 1 is a phase diagram based on the Y₂O₃-TiO₂-NiO molar fraction derived from the results of the analysis.

YTN of Sample No. 2 was identified as YTiO₃ (ICDD No. 70-2297) and Y(NiO₃) (ICDD No. 70-6592) . Thus it was confirmed that YTN of Sample No. 2 was a crystal having a structure that was closely analogous to the structures of YTiO₃ and Y(NiO₃). Since the results of an X-ray spectroscopic analysis (EPMA) showed that Y, Ti, Ni, and O were present uniformly in the crystal, Sample No. 2 was considered to be a solid solution of these elements. Since the contents of Ti and Ni were substantially equal to each other, Sample No. 2 was considered to have a composition of YTi_{0.5}Ni_{0.5}O₃ (YTN) or the like.

The proportions of open pores in these samples were measured by an Archimedes method. The average linear thermal expansion coefficients of the samples in the range of room temperature to 1000°C were measured in accordance with JIS R 1618-1994. After being fired in the air, the samples were subjected to a reduction treatment, in which the samples were maintained at 850°C for 16 hours with hydrogen gas supplied at 50 cc/min and nitrogen gas supplied at 300 cc/min.

The dimensional change rate of the sample after reduction was determined as (dimension measured after reduction)/(dimension measured before reduction). The approximate dimensions of the sample was 3 mm high × 5 mm wide × 36 mm long. The length of the sample was measured with a micrometer.

**[Table 1]**

| Sample No. | Chemical composition | Composition (mass ratio) | | | Rietveld quantitative analysis results (mass%) | | | | | | Open pore proportion | Average linear thermal expansion coefficient RT-1000°C | Dimensional change rate |
|---|---|---|---|---|---|---|---|---|---|---|---|---|---|
| | | Y₂O₃ | TiO₂ | NiO | Y₂Ti₂O₇ | YTN | NiO | Y₂O₃ | NiTiO₃ | TiO₂ | % | ×10⁻⁶/°C | % |
| 1 | Y(Ti_{0.8}Ni_{0.2})O_{3.3} | 0.59 | 0.33 | 0.08 | 62.1 | 37.9 | 0 | 0 | 0 | 0 | 40.6 | 10.79 | 100.02 |
| 2 | Y(Ti_{0.5}Ni_{0.5})O₃ | 0.59 | 0.21 | 0.20 | 0.8 | 99.2 | 0 | 0 | 0 | 0 | 51.2 | 10.69 | 100.11 |
| 3 | Y(Ti_{0.2}Ni_{0.8})O_{2.7} | 0.60 | 0.08 | 0.32 | 0 | 42.6 | 25.9 | 31.5 | 0 | 0 | 30.3 | 10.12 | 100.01 |
| 4 | Y_{0.6}(Ti_{0.8}Ni_{0.2})_{1.4}O_{3.42} | 0.38 | 0.50 | 0.12 | 66.2 | 0 | 0 | 0 | 24.8 | 24.8 | 0.3 | 9.88 | 99.95 |
| 5 | Y_{0.6}(Ti_{0.5}Ni_{0.5})_{1.4}O₃ | 0.38 | 0.32 | 0.30 | 65.5 | 0 | 29.2 | 0 | 5.3 | 5.30 | 0.3 | 11.11 | 100.00 |
| 6 | Y_{0.6}(Ti_{0.2}Ni_{0.8})_{1.4}O_{2.58} | 0.39 | 0.13 | 0.48 | 0.1 | 60.9 | 37.5 | 1.5 | 0 | 0 | 45.6 | 11.64 | 99.86 |

Table 1 shows that Sample Nos. 1 to 6 contained any one of Y₂Ti₂O₇ and a complex-oxide phase (YTN) including Y, Ti, and Ni; that the average linear thermal expansion coefficients of Sample Nos. 1 to 6 in the range of room temperature to 1000°C were able to be set to 9.88 × 10⁻⁶/°C to 11.64 × 10⁻⁶/°C, which were close to the average linear thermal expansion coefficient of zirconia, which is 10.8 × 10⁻⁶/°C; and that the dimensional change rates of Sample Nos. 1 to 6 after reduction were low.

The composition with which metallic Ni is precipitated when reduction is performed falls within the Y₂O₃-YTN-NiO composition range (region I), the Y₂Ti₂O₇-YTN-NiO composition range (region II), the Y₂Ti₂O₇-NiTiO₃-NiO composition range (region III), or the Y₂Ti₂O₇-NiTiO₃-TiO₂ composition range (region IV) in Fig. 1. Note that, NiTiO₃ is decomposed into TiO₂ and metallic Ni by reduction.

In these regions, regardless of whether the supporting body has electrical conductivity or an insulating property, an internal reformation function, which is an important function of the supporting body, is imparted to the supporting body due to the presence of Ni.

### Example 2

Ceramic sintered bodies having the compositions of Sample Nos. 7 to 31 shown in Table 2 were prepared using the powders used in Example 1. The average linear thermal expansion coefficients (× 10⁻⁶/°C) and electric conductivities (S/cm) of Sample Nos. 7 to 31 were measured as in Example 1. Table 2 shows the results. The electric conductivities shown in Table 2 were measured by a four-probe method in a hydrogen-nitrogen mixed atmosphere at 850°C at an oxygen partial pressure of 10⁻²¹ Pa.

Ceramic sintered bodies having the compositions of Samples Nos. 2, 3, 7-10, 13-15, 19, 32-34 are examples according to the present invention.

**[Table 2]**

| Sample No. | Chemical composition | Average linear thermal expansion coefficient (RT-1000°C, ×10⁻⁶/°C) | Electrical conductivity (@850°C, S/cm) |
|---|---|---|---|
| 2 | Y(Ti_{0.5}Ni_{0.5})O₃ | 10.2 | 3.2×10⁵ |
| 3 | Y(Ti_{0.2}Ni_{0.8})O_{2.7} | 10.2 | 4.3×10⁵ |
| 5 | Y_{0.6}(Ti_{0.5}Ni_{0.5})_{1.4}O₃ | 11.0 | 1×10³ |
| 6 | Y_{0.6}(Ti_{0.2}Ni_{0.8})_{1.4}O_{2.58} | 11.5 | 1.3×10³ |
| 7 | Y(Ti_{0.4}Ni_{0.6})O_{2.9} | 10.5 | 5.9×10⁵ |
| 8 | Y(Ti_{0.3}Ni_{0.7})O_{2.8} | 10.5 | 8.5×10⁵ |
| 9 | Y(Ti_{0.1}Ni_{0.9})O_{2.6} | 10.5 | 3.1×10⁵ |
| 10 | YNiO_{2.5} | 10.5 | 1.3×10⁶ |
| 11 | Y_{0.8}(Ti_{0.5}Ni_{0.5})_{1.2}O₃ | 11.4 | 4.9×10⁴ |
| 12 | Y_{0.8}(Ti_{0.4}Ni_{0.6})_{1.2}O_{2.88} | 11.0 | 4.1×10⁴ |
| 13 | Y_{0.8}(Ti_{0.3}Ni_{0.7})_{1.2}O_{2.76} | 11.1 | 2.5×10⁴ |
| 14 | Y_{0.8}(Ti_{0.2}Ni_{0.8})_{1.2}O_{2.64} | 11.3 | 3.3×10⁴ |
| 15 | Y_{0.8}(Ti_{0.1} Ni_{0.9})_{1.2}O_{2.52} | 11.2 | 2.1×10⁴ |
| 16 | Y_{0.8}Ni_{1.2}O_{2.4} | 11.2 | 9.4×10 |
| 17 | Y_{0.6}(Ti_{0.4}Ni_{0.6})_{1.4}O_{2.86} | 11.9 | 1.2×10³ |
| 18 | Y_{0.6}(Ti_{0.3}Ni_{0.7})_{1.4}O_{2.72} | 11.9 | 9.6×10⁴ |
| 19 | Y_{0.6}(Ti_{0.1}Ni_{0.9})_{1.4}O_{2.44} | 11.8 | 1.7×10³ |
| 20 | Y_{0.6}Ni_{1.4}O_{2.3} | 11.7 | 4.6×10² |
| 21 | Y_{0.3}(Ti_{0.5}Ni_{0.5})_{1.7}O₃ | 10.8 | 6.6×10 |
| 22 | Y_{0.3}(Ti_{0.4}Ni_{0.6})_{1.7}O_{2.83} | 11.4 | 1.1×10 |
| 23 | Y_{0.3}(Ti_{0.3}Ni_{0.7})_{1.7}O_{2.66} | 12.0 | 8.0×10² |
| 24 | Y_{0.3}(Ti_{0.2}Ni_{0.8})_{1.7}O_{2.49} | 12.8 | 2.1×10³ |
| 25 | Y_{0.3}(Ti_{0.1}Ni_{0.9})_{1.7}O_{2.32} | 12.9 | 5.4×10² |
| 26 | Y_{0.3}Ni_{1.7}O_{2.15} | 13.0 | 2.6×10³ |
| 27 | TiNiO₃ | 10.3 | 1.0 |
| 28 | Ti_{0.8}Ni_{1.2}O_{2.4} | 11.0 | 1.3×10 |
| 29 | Ti_{0.6}Ni_{1.4}O_{2.3} | 11.7 | 1.4×10³ |
| 30 | Ti_{0.4}Ni_{1.6}O_{2.2} | 12.6 | 3.2×10³ |
| 31 | Ti_{0.2}Ni_{1.8}O_{2.1} | 13.4 | 6.1×10³ |

Fig. 3 summarizes the results shown in Table 2 and Table 1 of Example 1 in terms of average linear thermal expansion coefficient. Fig. 4 summarizes the results shown in Table 2 and Table 1 of Example 1 in terms of electric conductivity. Fig. 5 shows the range in which a good electric conductivity and a good average linear thermal expansion coefficient are achieved.

### Example 3

A Y₂O₃ powder, a TiO₂ powder, and a NiO powder, which were the same as those used in Example 1, were weighed in order to prepare Sample Nos. 32 to 34 having the compositions shown in Table 3. In the mixture of these powders, 17 parts by mass of a cellulose-based pore-forming material relative to 100 parts by mass of the powder mixture was added. The resulting powder mixture was mixed for 24 hours by a wet process, subsequently a wax was mixed therein, and the resulting powder mixture was passed through a mesh to perform granulation. The granulated powder was formed into a compact body by uniaxial pressing, and the compact body was fired for 2 hours at 1500°C in the air.

After being fired, the resulting sintered body was analyzed by X-ray fluorescence spectroscopy. The contents of Y₂O₃, TiO₂, and NiO in the sintered body were the same as the amounts of powders added. The sintered body was subjected to an ICP emission spectral analysis and it was found that the sintered body contained inevitable impurities other than Y, Ti, and Ni, which were 0.1% by mass or less of rare-earth elements other than Y, Al, Si, and the like relative to the total mass of the sintered body.

Subsequently, the crystal phase of the sintered body was quantitatively analyzed as in Example 1 to determine the proportion of open pores, the average linear thermal expansion coefficient, and the reduction dimensional change rate of the sintered body. Table 3 shows the results as Sample Nos. 32 to 34.

**[Table 3]**

| Sample No. | Chemical composition | Composition (mass ratio) | | | Rietveld quantitative analysis results (mass%) | | | | | | Open pore proportion | Average linear thermal expansion coefficient RT-1000°C | Dimensional change rate | Electrical conductivity |
|---|---|---|---|---|---|---|---|---|---|---|---|---|---|---|
| | | Y₂O₃ | TiO₂ | NiO | Y₂Ti₂O₇ | YTN | NiO | Y₂O₃ | NiTiO₃ | TiO₂ | % | ×10⁻⁶/°C | % | (@850°C, S/cm) |
| 32 | Y_{0.48}Ti_{0.24}Ni_{1.28}O_{2.48} | 0.32 | 0.11 | 0.57 | 0 | 51.9 | 47.8 | 0.3 | 0 | 0 | 29.3 | 11.47 | 100.05 | 1.1 |
| 33 | Y_{0.38}Ti_{0.18}Ni_{1.44}O_{2.37} | 0.25 | 0.09 | 0.66 | 0 | 41.1 | 58.9 | 0 | 0 | 0 | 32.3 | 11.95 | 100.03 | 8.23×10 |
| 34 | Y_{0.28}Ti_{0.14}Ni_{1.58}O_{2.28} | 0.20 | 0.07 | 0.73 | 0 | 31.9 | 68.1 | 0 | 0 | 0 | 32.7 | 12.54 | 99.96 | 6.572×10³ |

Table 3 shows that, since Sample Nos. 32 to 34 contained any one of Y₂Ti₂O₇ and the complex-oxide phase including Y, Ti, and Ni, the average linear thermal expansion coefficients of the supporting bodies were able to be set to 11.47 × 10⁻⁶/°C to 12.54 × 10⁻⁶/°C, which were close to the average linear thermal expansion coefficient of zirconia, which is 10.8 × 10⁻⁶/°C and that the reduction dimensional change rates of the supporting bodies were low. Reference Signs List

- 1:: separator
- 11:: supporting body
- 3, 13:: fuel electrode layer
- 4, 14:: solid-electrolyte layer
- 6, 16:: oxygen electrode layer
- 32:: measurement electrode
- 34:: solid-electrolyte layer
- 35, 36:: ceramic device
- 37:: reference electrode

## Claims

1. A ceramic sintered body comprising 95% by mass or more of a component having a composition represented by YₓTi_{y}Ni_{z}O_{3±δ} using molar ratios, wherein 0 < x, 0 < y, 0 ≤ z, x + y + z = 2, and δ ≤ 1 are satisfied, and
wherein, in a phase diagram based on Y₂O₃-TiO₂-NiO molar fractions, the composition of the component falls within a range surrounded by a vertex representing Y₂O₃, a point representing YTi_{0.5}Ni_{0.5}O₃ and a vertex representing NiO.

2. A high-temperature-use member comprising the ceramic sintered body according to Claim 1.

3. The high-temperature-use member according to Claim 2, wherein Ni is present in the ceramic sintered body as a crystal phase, and the high-temperature-use member has electrical conductivity.

4. The high-temperature-use member according to Claim 2 or 3, wherein at least one substance selected from Ni, NiO, and NiTiO₃ is present in the ceramic sintered body as a crystal phase, and the ceramic sintered body includes 30% by volume or more of Ni in terms of metallic Ni.

5. An electrochemical device comprising the high-temperature-use member according to any one of Claims 2 to 4 and a device on the high-temperature-use member, the device including a first electrode layer, a solid-electrolyte layer including a ceramic, and a second electrode layer.

## Patentansprüche

1. Ein Keramiksinterkörper, aufweisend 95 Masse-% oder mehr eines Bestandteils mit einer Zusammensetzung, die durch YₓTi_{y}Ni_{z}0_{3±δ} unter Verwendung von Molverhältnissen dargestellt ist, wobei 0 < x, 0 < y, 0 ≤ z, x + y + z = 2 und δ ≤ 1 erfüllt sind, und
wobei in einem Phasendiagramm basierend auf Y₂O₃-TiO₂-NiO molaren Anteilen die Zusammensetzung des Bestandteils in einen Bereich fällt, der umgeben ist von einem Scheitel, der Y₂O₃ darstellt, einem Punkt, der YTi_{0,5}Ni_{0,5}O₃ darstellt und einem Scheitel, der NiO darstellt.

2. Ein Hochtemperaturverwendungselement, aufweisend den Keramiksinterkörper gemäß Anspruch 1.

3. Das Hochtemperaturverwendungselement gemäß Anspruch 2, wobei Ni in dem Keramiksinterkörper als eine Kristallphase vorliegt und das Hochtemperaturverwendungselement elektrische Leitfähigkeit besitzt.

4. Das Hochtemperaturverwendungselement gemäß Anspruch 2 oder 3, wobei mindestens eine aus Ni, NiO und NiTiO₃ ausgewählte Substanz im Keramiksinterkörper als eine Kristallphase vorliegt und der Keramiksinterkörper 30 Volumen-% oder mehr Ni in Form von metallischem Ni enthält.

5. Eine elektrochemische Vorrichtung, aufweisend das Hochtemperaturverwendungselement gemäß irgendeinem der Ansprüche 2 bis 4 und eine Vorrichtung auf dem Hochtemperaturverwendungselement, wobei die Vorrichtung eine erste Elektrodenschicht, eine Festelektrolytschicht, die eine Keramik enthält, und eine zweite Elektrodenschicht aufweist.

## Revendications

1. Un corps fritté céramique, comprenant 95 % en masse ou plus d'un composant présentant une composition représentée par YₓTi_{y}Ni_{z}O_{3±δ} en utilisant des rapports molaires, dans lequel 0 < x, 0 < y, 0 ≤ z, x + y + z = 2 et δ ≤ 1 sont satisfaits, et
dans lequel, dans un diagramme de phase basé sur des fractions molaires Y₂O₃-TiO₂-NiO, la composition du composant se situe dans un domaine entouré par sommet représentant Y₂O₃, un point représentant YTi_{0,5}Ni_{0,5}O₃, et un sommet représentant NiO.

2. Un élément pour utilisation à haute température comprenant le corps fritté céramique selon la revendication 1.

3. L'élément pour utilisation à haute température selon la revendication 2, dans lequel Ni est présent dans le corps fritté céramique en tant qu'une phase cristalline, et l'élément pour utilisation à haute température a une conductivité électrique.

4. L'élément pour utilisation à haute température selon la revendication 2 ou 3, dans lequel au moins une substance choisie parmi Ni, NiO et NiTiO₃ est présente dans le corps fritté céramique en tant que phase cristalline, et le corps fritté céramique comprend 30 % en volume ou plus de Ni en termes de Ni métallique.

5. Un dispositif électrochimique comprenant l'élément pour utilisation à haute température selon l'une quelconque des revendications 2 à 4 et un dispositif sur l'élément pour utilisation à haute température, le dispositif comprenant une première couche d'électrode, une couche d'électrolyte solide comprenant une céramique, et une deuxième couche d'électrode.
